Europäisches Patentamt

European Patent Office

Office européen des brevets

(11) Publication number: **0 309 216**
A1

# EUROPEAN PATENT APPLICATION

(21) Application number: 88308736.3

(22) Date of filing: 21.09.88

(51) Int. Cl.⁴: **B 65 H 49/34**
H 02 G 1/18, H 02 G 1/08,
B 23 K 9/12

(30) Priority: 25.09.87 GB 8722617

(43) Date of publication of application:
29.03.89 Bulletin 89/13

(84) Designated Contracting States:
BE DE ES FR IT NL SE

(71) Applicant: PLESSEY OVERSEAS LIMITED
Vicarage Lane
Ilford Essex IGI 4AQ (GB)

(72) Inventor: Wormley, Peter Frances
15 Green Close
Woodlands Ashurst Southampton, SO4 2HU (GB)

(74) Representative: Pritchard, Evan
Intellectual Property Department The Plessey Company
plc Vicarage Lane
Ilford Essex IG1 4AQ (GB)

(54) Linear drive apparatus.

(57) Apparatus for feeding a cable-like material 12 off a storage reel 10, the feeding action serving to push a length of the material 12 in a direction tangentially to the quantity stored on the reel, the apparatus comprising an endless support belt 16 which is in contact with an outer surface of the material on the storage reel 10, the belt extending round part the circumference of the reel and being carried on rollers 14 which are resiliently mounted so that the belt 16 portion in contact with the said outer surface is pressed thereagainst.

Fig.1.

**Description**

## LINEAR DRIVE APPARATUS

This invention relates to linear drive apparatus. It relates particularly to apparatus that can be used to feed a linear-shaped material to or from a storage drum or reel. Instead of the material having to be drawn from storage on the drum by a pulling action, the apparatus acts to push a length of the material from off the drum surface.

The linear-shaped material is thus pushed positively away from the drum surface and this action can be made use of for purposes such as feeding solder wire from a spool, feeding wire from a supply for making electrical connections, and pushing cables (for example, electrical or fibre optic cables) down conduits. When laying buried pipes such as gas pipes underground a 'mole' is frequently used to make the initial passage and the ability to push a compressed air pipe trailing behind the 'mole' should enable the hole-making performance to be significantly improved.

According to the invention, there is provided apparatus for feeding a cable-like material from off a storage reel, the feeding action serving to push a length of the material in a direction tangentially to the quantity stored on the reel, the apparatus comprising an endless support belt which is in contact with an outer surface of the material on the storage reel, the belt extending round part of the circumference of the reel and being carried on rollers which are resiliently mounted so that the belt portion in contact with the said outer surface is pressed thereagainst.

Preferably, the belt extends round a third or more of the circumference of the reel. The belt may have a width corresponding to that of the storage reel. The belt may be supported on three or more rollers. At least one of the rollers may be located on adjustable mounting means.

One or more of the rollers may carry a side fence effective to prevent sideways movement of the belt on the roller surface.

The belt may be made of a rubber or plastics coated fabric material.

By way of example, some particular embodiments of the invention will now be described with reference to the accompanying drawings, in which:

    Figure 1 is a diagrammatic side view of the linear drive apparatus,

    Figure 2 is a perspective view of the belt part of the apparatus,

    Figure 3 is a side view of a different embodiment of the apparatus, and,

    Figure 4 is a part cross-sectional view taken on the line IV-IV of Figure 3.

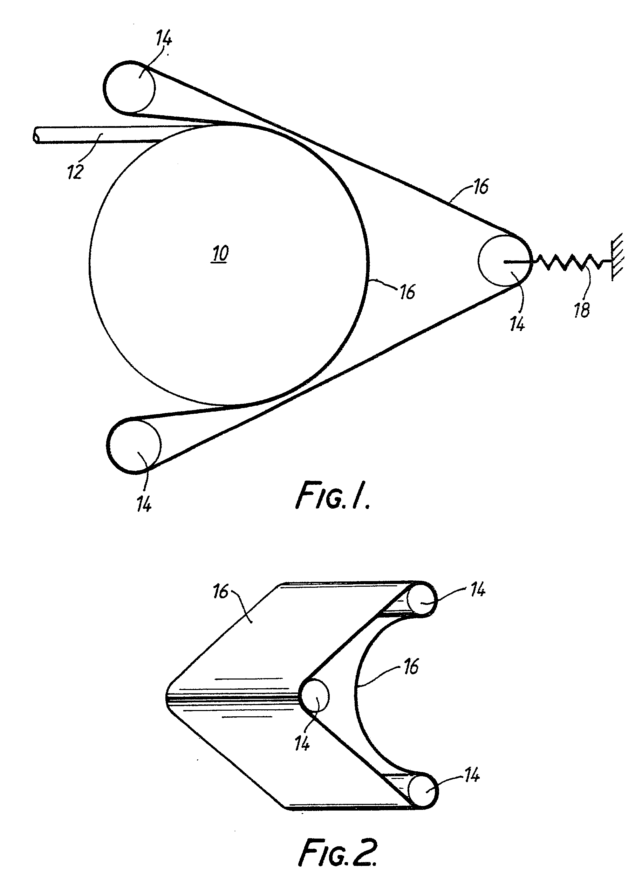

As shown in Figure 1, the linear drive apparatus comprises a storage reel 10 carrying a length of electrical cable 12 which is required to be pushed off the reel in a direction towards the left hand-side of the Figure. Arranged about the reel 10 are three freely rotatable rollers 14 with a rubber belt 16 wrapped around the rollers. The rollers 14 are positioned so tht one roller lies above the storage reel with one below the reel and one to the rear of the reel. The rearward roller is coupled to a mounting point by a spring 18. In an alternative embodiment, a hydraulic cylinder could be used to adjust the position of the roller to vary the tension in the belt 16 for controlling the driving of the cable 12.

In operation, in order to drive the cable 12 the reel 10 is rotated in an anticlockwise direction. The pressure of the belt 16 on the surface of the cable forces the cable 12 to leave the reel in a controlled manner. In tests, it has been found that the cable can be pushed in this way down a long tube with multiple bends including those of an S-shape and having a radius ten times the diameter of the cable. It was also found that movement of the cable could be stopped and restarted from any point in the tube and that the presence of any water in the tube had no significant effect.

Although not shown in Figure 1, the rollers 14 have side fences arranged to prevent sideways creep of the belt on the rollers due to the layering of the cable coils on the reel 10.

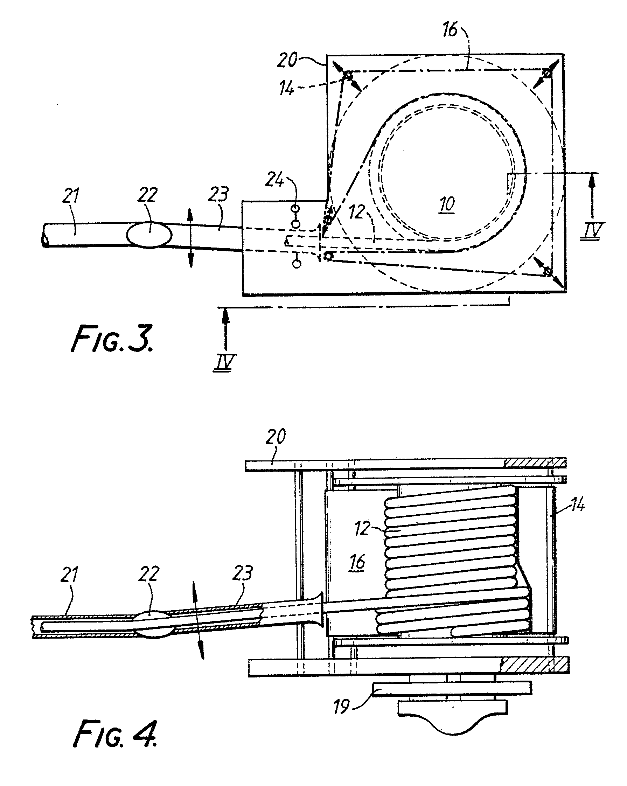

Figure 3 and 4 show a different embodiment where the storage reel 10 includes an internally-located motor which thus forms a winch drive arrangement. The drive from the motor passes through a clutch and tension mechanism 19 before being applied to the reel surface. The storage reel 10 and the rollers 14 carrying the belt 16 are accommodated in a housing 20. In this embodiment, there are five rollers 14 and all but one of these are resiliently mounted as shown. The belt is thus able to be wrapped round about two-thirds of the reel circumference.

The housing 20 is mounted in a fixed relationship with a deployment tube 21 and this includes a joint 22 which supports a short angularly movable portion of tube 23. A level wind mechanism 24 is also provided so that the cable will be laid neatly on the reel when it is being wound in for storage thereon.

In operation, energisation of the motor causes the storage reel 10 to rotate in a clockwise direction and the cable length is pushed off the reel and fed down the deployment tube 21. The cable is driven with some force down the tube so that bends in the tube do not present serious obstruction to the cable movement. As the reel 10 is rotated, the belt is moved by frictional forces so that it travels freely round on the rollers 14. The resilient mountings of the rollers 14 keep the portion of the belt in contact with the cable surface at a predetermined tension so that the belt is pressed against the cable surface. Since the outside diameter of the cable carried on the reel becomes reduced with the unwinding of the cable, the resilient mountings of the rollers have to take up this movement in order to maintain the belt in contact with the cable surface.

When the cable is required to be rewound onto the storage reel 10, the same actions take place in reverse. The level wind mechanism 24 ensures that the cable returned to the reel is laid neatly on the reel 10 surface.

The foregoing description of embodiments of the invention has been given by way of example only and a number of modifications may be made without departing from the scope of the invention as defined in the appended claims. For example, instead of the belt 16 being free running on the rollers 14, the belt could be driven by a motor operated separately from that used to drive the reel 10. The seperate movement of the belt could be used to increase or to reduce the tension in the cable as it lies on the reel 10. If the belt was driven at the same speed as the outermost layer of cable on the drum the belt movement could contribute to the pushing forces providing the linear drive.

The tension in the belt 16 is controlled by the movement of the one or more resiliently mounted rollers as shown by the spring 18 (Figure 1) or a corresponding hydraulic cylinder adjustment. A hydraulic cylinder could readily be controlled to provide tension forces which vary in accordance with the number of layers of cable present on the reel at a given moment.

Any drive means for the belt and the tension forces present in the belt could further be controlled so that the effects of slipping in the linear drive provided by the apparatus would be minimised.

The linear drive apparatus of the invention has been found to be suitable, as already stated, for pushing cables down conduits and this use can be extended to operations such as drain cleaning equipment and for feeding out trailing cables from ships such as for aerials or sonar. The axis of the storage reel could be positioned horizontally or vertically as required since this need not affect the operation of the apparatus. The apparatus has been described as serving to push the cable-like material off the storage reel but it is, of course, equally effective to feed the extended length of the material back onto the reel.

**Claims**

1. Apparatus for feeding a cable-like material from off a storage reel, the feeding action serving to push a length of the material in a direction tangentially to the quantity stored on the reel, the apparatus comprising an endless support belt which is in contact with an outer surface of the material on the storage reel, the belt extending round part of the circumference of the reel and being carried on rollers which are resiliently mounted so that the belt portion in contact with the said outer surface is pressed thereagainst.

2. Apparatus as claimed in Claim 1, in which the belt extends round a third or more of the circumference of the reel.

3. Apparatus as claimed in Claim 1 or 2, in which the said belt has a width corresponding to that of the storage reel.

4. Apparatus as claimed in any one of Claims 1 to 3, in which the belt is supported on three or more rollers.

5. Apparatus as claimed in Claim 4, in which at least one of said rollers is located on adjustable mounting means.

6. Apparatus as claimed in Claim 4 or 5, in which at least one of said rollers carries a side fence effective to prevent sideways movement of the belt of the roller surface.

7. Apparatus as claimed in any one of Claims 1 to 6, in which the belt is made of a rubber or plastics coated fabric material.

8. Linear drive apparatus substantially as hereinbefore described with reference to any one of Figures 1 to 4 of the accompanying drawings.

FIG. 1.

FIG. 2.

EP 0 309 216 A1

**FIG. 3.**

**FIG. 4.**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | GB-A-2114095 (DEUTSCHE GESELLSCHAFT FUR WIEDERAUFARBEITUNG VON KERNBRENNSTOFFEN MBH ) <br> * page 2, line 54 - line 59; claim 12 * <br> --- | 1-8 | B65H49/34 <br> H02G1/18 <br> H02G1/08 <br> B23K9/12 |
| A | US-A-4664329 (C PALI) <br> * figure 5 * <br> --- | 1-8 | |
| A | FR-A-1525567 (NATIONAL RESEARCH DEVELOPMENT CORPORATION ) <br> --- | | |
| A | US-A-4179056 (D W SCHMERLING) <br> --- | | |
| A | FR-A-1358595 (GEOFFROY-DELORE) <br> --- | | |
| A | US-A-2141934 (W D PIERSON) <br> --- | | |
| A | US-A-4057202 (H F CARR, JR) <br> --- | | |
| A | DE-A-1257394 (VEB ROBUR-WERKE) <br> ----- | | |
| | | | TECHNICAL FIELDS SEARCHED (Int. Cl.4 ) <br><br> B65H <br> B66D <br> H02G <br> B23K |

The present search report has been drawn up for all claims

| Place of search | Date of completion of the search | Examiner |
|---|---|---|
| THE HAGUE | 16 DECEMBER 1988 | D HULSTER E.W.F. |

EPO FORM 1503 03.82 (P0401)